## Europäisches Patentamt
## European Patent Office
## Office européen des brevets

(19)

(11) Numéro de publication: **0 039 277**
**A2**

(12) # DEMANDE DE BREVET EUROPEEN

(21) Numéro de dépôt: **81400624.3**

(22) Date de dépôt: **17.04.81**

(51) Int. Cl.³: **F 16 L 59/16**

---

(30) Priorité: **18.04.80 DE 3015013**

(43) Date de publication de la demande:
**04.11.81 Bulletin 81/44**

(84) Etats contractants désignés:
**AT BE CH FR GB IT LI LU NL SE**

(71) Demandeur: **ISOVER SAINT-GOBAIN**
**63 rue de Villiers**
**F-92209 Neuilly sur Seine(FR)**

(72) Inventeur: **Ruchel, Frank**
**28 A Im Unteren Rech**
**D-6802 Ladenburg(DE)**

(74) Mandataire: **Eudes, Marcel et al,**
**SAINT-GOBAIN RECHERCHE 39 Quai Lucien Lefranc**
**F-93304 Aubervilliers(FR)**

---

(54) **Revêtement calorifuge pour coude de tube.**

(57) L'invention concerne un revêtement calorifuge pour tube coudé, formé de deux éléments complémentaires et jointifs, de forme générale torique, en matière isolante en particulier à base de fibres minérales associés en une coquille de section annulaire fermée.

Selon l'invention, la surface de séparation (9, 9a) entre les deux éléments (7, 8 ; 7a, 8a) de la coquille a une forme telle que chacun d'eux constitue une machoîre qui présente au moins le long de la ligne médiane (10) du coude, une zone de contact (15, 16 ; 15a, 16a) recouvrant la circonférence du tube sur plus de 180°.

Application aux calorifugeage des tuyauteries.

Fig. 1

Croydon Printing Company Ltd.

EP 0 039 277 A2

0039277

REVETEMENT CALORIFUGE POUR COUDE DE TUBE

L'invention concerne un revêtement calorifuge pour tube coudé, formé de deux éléments de forme générale torique en matière isolante, en particulier à base de fibres minérales, complémentaires et jointes associés en une coquille de section annulaire fermée.

Un tel revêtement calorifuge est connu par exemple du modèle d'utilité DE 72 36 452. Pour calorifuger un tube dans une partie coudée, on utilise en l'occurrence des coquilles coudées séparées dans le plan de cintrage de la ligne médiane du tube, en deux demi-coquilles symétriques, qui, posées de part et d'autre sur le coude du tube, se complètent pour reconstituer la section annulaire complète. Il est encore possible, selon ce texte, de séparer les deux éléments de la coquille le long de la surface d'un cylindre circulaire d'axe coïncidant avec l'axe de cintrage du coude et de rayon égal au rayon de cintrage moyen, à savoir le rayon de courbure de la ligne médiane du tube, disposition représentée en outre par le modèle d'utilité DE 78 30 252. Il est vrai qu'on obtient ainsi non pas deux demi-coquilles identiques, mais un arc intérieur plus petit et un arc extérieur plus grand ; cependant cette disposition assure une meilleure fermeture du joint entre les éléments lorsqu'on les fixe sur la partie coudée du tube.

Dans chaque cas, il faut lors du montage, et pour la fixation, retenir sur le tube au moins l'un des éléments de coquille, voire les deux, ce qui rend le montage difficile puisque l'opérateur, s'il doit opérer seul, ne dispose pas de ses deux mains pour la fixation.

L'invention a donc pour but de donner au revêtement calorifuge une configuration qui, lorsqu'on le met en place sur le tube coudé, fasse tenir ses éléments sans autre soutien manuel, fournissant une fixation provisoire qui permette à une personne d'effectuer seule avec les deux mains la fixation définitive, par exemple au moyen d'une ligature.

Selon l'invention, la surface de séparation entre ces deux éléments de la coquille, a une forme telle que chacun de ces éléments constitue une machoire qui présente au moins, le long de la ligne médiane du coude du tube, une zone de contact recouvrant la circonférence du tube sur plus de 180°. Grâce à cela, lorsqu'on pose l'élément de coquille, la machoire s'ouvre par flexion dans cette zone où elle dépasse la demi-circonférence, puis elle revient élastiquement, assurant par pincement ou emboîtement l'accrochage provisoire de cet élément sur le tube coudé. Dans la zone correspondante de l'élément complémentaire, la matière est en retrait et recouvre la circonférence du tube sur moins de 180° de sorte que, dans toute section, les deux éléments de la coquille reconstituent la section annulaire complète. A lui seul, le fait de déplacer la surface de séparation hors du plan de cintrage ou autre surface de division diamétrale, en au moins deux positions et dans des sens différents procure un maintien spontané de chacun des éléments de coquille lors de leur pose sur le coude du tube ceci, en principe, indépendamment de la disposition de la surface de séparation par rapport au plan de cintrage du coude.

Des développements avantageux de l'invention permettent en particulier d'engendrer de façon particulièrement simple, lors de la fabrication, le tracé désiré de la surface de séparation. Ils apparaîtront ainsi que d'autres détails, particularités et avantages de l'invention dans la description ci-dessous des modes d'exécution représentés par les dessins, dont :

- la figure 1 est une vue en plan d'un revêtement calorifuge selon l'invention, la surface de séparation étant celle d'un cylindre circulaire d'axe perpendiculaire au plan de cintrage de la ligne médiane du coude du tube, et de rayon inférieur au rayon de cintrage moyen de celui-ci,

- la figure 2 est une vue analogue, montrant une variante dans laquelle le rayon de courbure du cylindre est infini, de sorte que sa surface dégénère en un plan,

- la figure 3 est une coupe suivant les lignes III-III des figures 1 et 2, et

- la figure 4 est une coupe suivant les lignes IV-IV des figures 1 et 2.

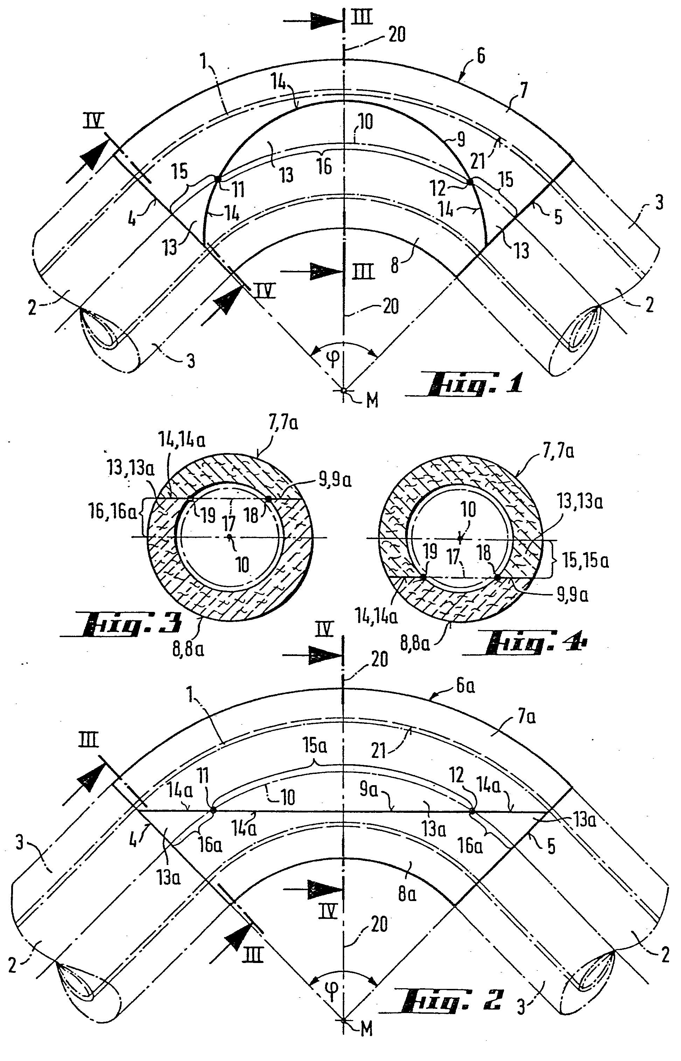

La figure 1 montre en trait mixte un tube dont la partie coudée 1 relie deux tronçons rectilignes 2 faisant, dans le cas de l'exemple, un angle droit. Les tronçons de tube rectilignes 2 sont protégés contre les pertes de chaleur de manière connue en soi par des chemises calorifuges 3, également dessinées en trait mixte, qui se raccordent selon des surfaces frontales 4 et 5 à une coquille calorifuge torique 6 garnissant le coude 1. La coquille calorifuge 6 est formée, comme le montre le dessin, de deux éléments complémentaires 7 et 8. Ces derniers s'assemblent le long d'une surface de séparation 9 qui, dans le cas de l'exemple, coupe la ligne médiane 10 du tube coudé, en deux points 11 et 12, de telle sorte que les éléments de coquille 7 et 8 présentent alternativement des zones en saillie 13 et des zones en retrait 14, s'adaptant entre elles pour reconstituer dans chaque section de revêtement calorifuge une section annulaire complète de matière isolante.

Les zones en saillie de l'élément de coquille extérieur 7 correspondent à des portions 15 du coude et celles de l'élément de coquille intérieur 8 à une portion 16. Dans le cas représenté, la surface de séparation entre les éléments de coquille 7 et 8 est un cylindre de génératrices perpendiculaires au plan de cintrage et qui, dans une section transversale annulaire telle que III-III et IV-IV dessine une ligne de coupure formée de deux segments d'une droite référencée 17 sur les figures 3 et 4, droite décalée par rapport à la ligne médiane 10 du coude, c'est à dire au centre de la section. Cette droite coupe la face intérieure du garnissage en deux points 18 et 19 opposés l'un à l'autre de chaque section, points qui définissent deux lignes d'intersection de la surface de séparation 9 avec la face intérieure de la coquille isolante 6.

Comme on le voit en particulier par les figures 3 et 4, chacun des éléments de coquille 7 et 8 présente ainsi, dans la partie en saillie 13 qui lui est propre, une zone de contact qui recouvre la circonférence du tube sur plus de 180° ; il forme donc une machoire refermée sur ce tube.

On voit aussi sans peine que la condition d'après laquelle la droite 17 joignant les points 18 et 19 ainsi définis ne coïncide pas avec un diamètre du tube peut être remplie même si la surface de séparation 9 est différente et dessine, de façon non représentée plus précisément, deux lignes de coupure situées différemment de part et d'autre de la section annulaire, selon la représentation des figures 3 et 4, relativement à l'axe médian 10 du tube, l'un des points 18 et

4

19 étant évidemment aussi sans importance ; on peut donc faire varier cette surface conformément aux besoins, dans chaque cas d'espèce. La coquille calorifuge 6 peut être, par exemple, constituée de polyuréthane alvéolaire dur, moulé par injection, ou formée sans problèmes dans une matière apte à recevoir une forme compliquée, les éléments de coquille 7 et 8 étant fabriqués sous forme de pièces séparées, ce qui donne une grande liberté en ce qui concerne la position de la surface de séparation par rapport au coude du tube. Toutefois, on peut aussi effectuer la préfabrication de la coquille calorifuge 6 sous une forme à section annulaire complète puis effectuer une coupe appropriée pour obtenir la surface de séparation désirée. Cette dernière possibilité existe en particulier pour les revêtements calorifuges en fibres minérales qui, de manière connue en soi, peuvent être fabriqués sous forme polygonale par assemblage de segments d'une gaine calorifuge à axe médian rectiligne, puis découpés selon la surface de séparation 9 en vue du montage. A cet effet, la disposition représentée de la surface de séparation 9 convient particulièrement, car sa forme, qui correspond à un arc de cercle, est facile à engendrer à l'aide d'un montage rotatif.

Toutefois, indépendamment de la fabrication, il est avantageux que la disposition des parties en saillie 13 et en retrait 14 soit telle que, de part et d'autre du plan bissecteur du dièdre $\varphi$ , définissant le cintrage du coude, donc, dans la représentation, sur les 45° de part et d'autre de la trace d'un plan 20 perpendiculaire au plan de figure et passant par le centre M de l'arc de cintrage $\varphi$ , on obtienne une zone de pincement ou de fermeture 15, 16 sur chacun des éléments de coquille 7 et 8, et ceci de façon symétrique par rapport au plan 20, de sorte que les deux éléments de coquille 7 et 8 ne peuvent pas pencher plus fort d'un côté que de l'autre. Dans l'exemple d'exécution de la figure 1, on y parvient grâce au fait que la zone de fermeture 16 de l'élément de coquille inférieure 8 s'étend largement de part et d'autre du plan bissecteur 20 et que les zones de fermeture de l'élément de coquille extérieur 7 sont situées symétriquement autour du plan 20 au voisinage des deux surfaces frontales 4 et 5. A cet effet, l'axe du cylindre sur lequel est située la surface de séparation 9 se trouve, dans le plan bissecteur 20, entre l'axe de cintrage M et la ligne médiane 10 du coude, sa position et le rayon du cylindre qui définit la surface de séparation 9 étant choisis de telle sorte que, selon la matière utilisée pour constituer le revêtement calorifuge, la taille des saillies 13 permette aux machoires de s'ouvrir sans dommage par flexion élastique, lorsqu'on emboite les éléments de coquille 6 et 7 sur le coude 1, mais que d'autre part, les saillies recouvrent suffisamment celui-ci pour assurer une retenue stable par pincement. Bien entendu, dans la région des saillies 13, il faut aussi éviter d'aller jusqu'à enserrer complètement le tube, car, il ne serait plus possible d'emboîter latéralement les éléments de coquille sur celui-ci ; mais, dans le cas d'une matière déformable, l'angle de fermeture maximal des machoîres peut éventuellement dépasser 300°.

Dans le mode d'exécution de la figure 2, les éléments identiques conservent leurs références et les parties qui se correspondront par analogie portent des références homologues à l'adjonction près d'un indice a, de sorte que la structure représentée apparaît clairement à l'aide des seules explications données à propos de la figure 1.

Le mode d'exécution de la figure 2 se distingue seulement de celui de la figure 1 par le fait que le cylindre circulaire qui engendre la surface de séparation 9a présente un rayon non pas inférieur, mais supérieur au rayon de cintrage de la ligne médiane 10 du coude du tube, son axe étant, à nouveau, situé dans le plan bissecteur 20 mais au delà de l'axe de cintrage M. Dans le cas de l'exemple choisi, l'axe du cylindre est rejeté à l'infini et le cylindre dégénère en un plan de sorte que la surface de séparation 9a peut s'engendrer par une coupe rectiligne, d'exécution particulièrement simple. Beaucoup de dimensions courantes de revêtements calorifuges 6a de ce genre permettent cette coupe rectiligne, qui suppose simplement que la surface de séparation plane 9a, sur le plan de la figure 2, reste entre les deux traits mixtes qui représentent la face intérieure 21 de la coquille calorifuge 6, 6a. Dans le cadre des coudes 1 les plus courts, qui ne dépassent donc pas 90°, et/ou dans le cas d'un tube de grande section porteur d'une faible épaisseur de calorifugeage, on peut même adopter un mode d'exécution dans lequel l'axe du cylindre définissant la surface de séparation 9 entre les éléments de coquille est situé du côté opposé à l'axe de cintrage M, relativement à la ligne médiane 10 du coude, de sorte que cette surface de séparation est courbée en sens opposé à la ligne médiane 10 du coude, pour obtenir des saillies 13a suffisamment prononcées. En règle générale, selon la figure 1, lorsque l'axe du cylindre passe entre l'axe de cintrage M et la ligne médiane 10 du coude il conduit, dans la région des surfaces frontales 4 et 5, à la présence de zones latérales de fermeture 15 sur l'élément de coquille extérieur 7, tandis que, s'il passe hors du segment en question, on obtient des zones latérales de fermeture 16a sur l'élément de coquille intérieur 8a.

Bien entendu, il n'est pas indispensable de donner à la surface de séparation 9 ou 9a un profil en arc de cercle, car, évidemment, un cylindre elliptique, par exemple, ou d'autres formes, assurent en principe un effet analogue et dans certains cas meilleur. Toutefois, la forme en arc de cercle décrite et en particulier sa version rectiligne selon la figure 2 sont particulièrement faciles à exécuter s'il s'agit d'effectuer une coupe, au montage, pour former des éléments complémentaires 7 et 8, 7a et 8a dans des coquilles calorifuges 6 ou 6a préfabriquées par exemple à partir de différents segments à section circulaire complète. En outre, les applications de l'invention ne sont pas limitées par principe au calorifuge des coudes de tubes ; celle-ci peut aussi s'employer de façon analogue dans le cas de chemises calorifuge 3 à axe médian rectiligne, lorsqu'on en a besoin dans certains cas d'espèce.

R E V E N D I C A T I O N S

1. Revêtement calorifuge pour tube coudé formé de deux éléments de forme générale torique en matière isolante complémentaires et jointifs, associés èn une coquille de section annulaire fermée caractérisé par le fait que la surface de séparation entre ces ceux éléments de la coquille a une forme telle que chacun d'eux constitue une machoîre qui présente, au moins le long de la ligne médiane du coude, une zone de contact recouvrant la circonférence du tube sur plus de 180°.

2. Revêtement selon la revendication 1, caractérisé par le fait que les dites zones de contact correspondent à des portions ou zones de fermeture (15, 16 ; 15a, 16a) disposées de façon au moins approximativement symétriques de part et d'autre du plan (20) bissecteur du dièdre définissant le cintrage du coude 1 du tube.

3. Revêtement selon l'une des revendications 1 et 2, caractérisé par le fait que la surface de séparation (9, 9a) est placée transversalement, en particulier pratiquement perpendiculairement au plan de cintrage du coude (1).

4. Revêtement selon la revendication 3, caractérisé par le fait que la surface de séparation (9, 9a) est cylindrique.

5. Revêtement selon la revendication 4, caractérisé par le fait que la surface de séparation est un cylindre circulaire.

6. Revêtement selon la revendication 5, caractérisé par le fait que la surface du cylindre circulaire présente un rayon de courbure différent de celui de la ligne médiane (10) du coude et coupe cette ligne en deux points (11, 12).

7. Revêtement selon la revendication 6, caractérisé par le fait que le rayon du cylindre est supérieur au rayon de courbure de la ligne médiane (10).

8. Revêtement selon la revendication 7, caractérisé par le fait que le rayon de courbure de la ligne médiane (10) est infini, de sorte que la surface de séparation dégénère en un plan.

*Fig: 1*

*Fig: 3*

*Fig: 4*

*Fig: 2*